# EUROPEAN PATENT APPLICATION

(11) **EP 3 738 848 A1**
(43) Date of publication of application: **18.11.2020**
(21) Application number: 19754532.0
(22) Date of filing: 29.01.2019
(51) Int. Cl.: B60W 10/04, B60R 21/0134, B60T 7/12, B60W 10/18, B60W 30/09, G08G 1/16

(54) **VEHICLE CONTROL DEVICE**

(30) Priority: 16.02.2018 JP 2018025813
(71) Applicant: MAZDA MOTOR CORPORATION, Hiroshima 730-8670 (JP)
(72) Inventor: CHEN, Xi, Aki-gun, Hiroshima 730-8670 (JP); NAKAGAMI, Takashi, Aki-gun, Hiroshima 730-8670 (JP); KATAYAMA, Shota, Aki-gun, Hiroshima 730-8670 (JP); TEZUKA, Rie, Aki-gun, Hiroshima 730-8670 (JP)
(74) Representative: Thoma, Michael
(86) International application number: PCT/JP2019/002833
(87) International publication number: WO 2019/159677

(57) **Abstract**

An AEB controller is configured to operate AEB if a laser radar detects an obstacle ahead, and stops operating the AEB if an accelerator pedal sensor detects an accelerator operation equal to or larger than a first operating amount. A PTC controller is configured to operate PTC in which engine power of an own vehicle is reduced and PTC autonomous braking is performed, if the obstacle ahead is detected and the accelerator operation equal to or larger than a second operating amount which is smaller than the first operating amount is detected, in a state where a vehicle speed detected by a vehicle speed sensor is within a predetermined vehicle speed range. An adjuster is configured to prioritize the PTC autonomous braking when an operating condition for the PTC autonomous braking and a stop condition for the AEB are both satisfied.

## Description

### Technical Field

The present invention relates to autonomous braking of a vehicle.

### Background Art

In recent years, a vehicle is known which is provided with an unintended acceleration suppression control for suppressing damage by collision caused by a sudden acceleration of an own vehicle by an erroneous operation of an accelerator pedal, and autonomous emergency braking for operating autonomous braking in an emergency to suppress damage by collision. The unintended acceleration suppression control is a control which suppresses a sudden acceleration of the vehicle by suppressing an engine power in a vehicle speed being equal to or lower than a predetermined vehicle speed, when an accelerator operation amount equal to or larger than a predetermined amount is detected in a state where there is an obstacle ahead of the own vehicle within a predetermined distance.

The autonomous emergency braking is a brake control which avoids colliding of the own vehicle with the obstacle ahead by operating a brake, regardless of a brake operation made by a driver, when an obstacle ahead is detected within a predetermined distance from the own vehicle. When the accelerator operation amount exceeds a certain value, the driver is presumed to have an intention to accelerate and the operation of the autonomous emergency braking is stopped.

Patent Literature 1 discloses a vehicle which is provided with a control against unintended accelerator depression equivalent to the unintended acceleration suppression control, and a pre-crash brake (PB) control equivalent to the autonomous emergency braking.

Specifically, Patent Literature 1 discloses a technique of avoiding a state of both the control against unintended accelerator depression and the PB control not operating in a scene in which a sudden acceleration of the vehicle needs to be suppressed, even when the vehicle speed becomes equal to or higher than a predetermined vehicle speed so that a quit condition for the control against unintended accelerator depression is satisfied. This is achieved by continuing the PB control even when an accelerator operation amount is large.

However, in the control against unintended accelerator depression in Patent Literature 1, only suppression of engine power is performed and the autonomous braking is not operated. Moreover, the PB control is not operated unless the vehicle speed is equal to or higher than the predetermined vehicle speed. Accordingly, in Patent Literature 1, there is a problem that the autonomous braking cannot be operated in a vehicle speed range lower than the predetermined vehicle speed.

### Citation List

### Patent Literature

Patent Literature 1: JP 2013-129228 A

### Summary of Invention

The present invention has been made to solve such a problem. An object of the present invention is to provide a technique of avoiding such a state that an autonomous braking is not operated in a predetermined vehicle speed range for a vehicle which is provided with a sudden acceleration suppression control and autonomous emergency braking.

A vehicle control device according to one aspect of the present invention includes:
an obstacle sensor configured to detect an obstacle ahead of an own vehicle;
a vehicle speed sensor configured to detect a vehicle speed of the own vehicle;
an accelerator operation sensor configured to detect an accelerator operation;
an autonomous emergency braking controller configured to operate first autonomous braking if the obstacle ahead is detected, and to stop operating the first autonomous braking when the accelerator operation equal to or larger than a first operating amount is detected, which is a stop condition;
an unintended acceleration suppression controller configured to operate an unintended acceleration suppression control in which engine power of the own vehicle is reduced and second autonomous braking is performed, if the obstacle ahead is detected and the accelerator operation equal to or larger than a second operating amount which is smaller than the first operating amount is detected in a state where a detected vehicle speed is within a predetermined vehicle speed range; and
an adjuster configured to prioritize the second autonomous braking when the stop condition for the first autonomous braking and an operating condition for the second autonomous braking are both satisfied.

According to the present invention, it is possible to avoid a state where the autonomous braking is not operated in a predetermined vehicle speed range, for a vehicle which is provided with a sudden acceleration suppression control and autonomous emergency braking.

### Brief Description of Drawings

FIG.1 is a block diagram illustrating a configuration of a vehicle control device according to an embodiment of the present invention.
FIG. 2 is a chart illustrating an example of operating timings of a PTC and an AEB.
FIG. 3 is a flowchart illustrating an example of a process performed by a PTC controller illustrated in FIG. 1.
FIG. 4 is a flowchart illustrating an example of a process performed by an AEB controller illustrated in FIG. 1.
FIG. 5 is a flowchart illustrating an example of a process performed by an adjuster illustrated in FIG. 1.

### Description of Embodiment

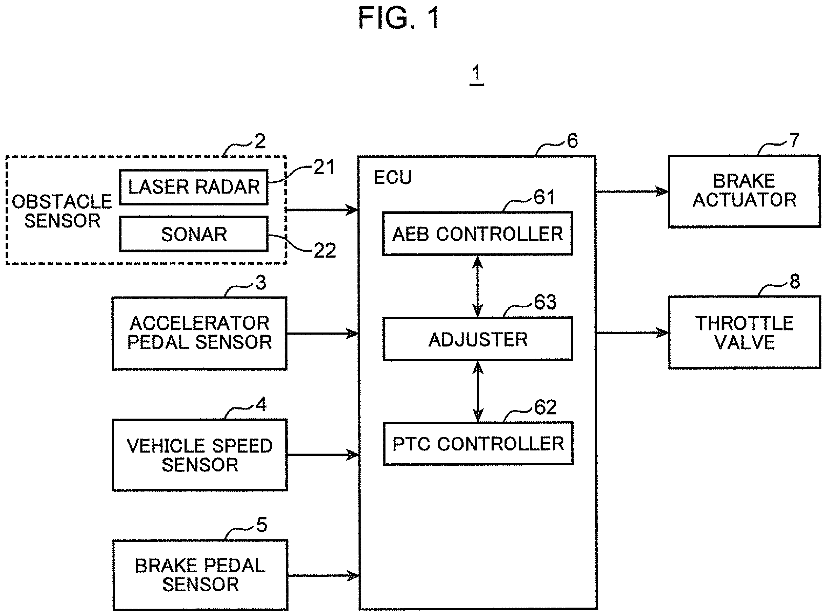

FIG.1 is a block diagram illustrating a configuration of a vehicle control device 1 according to an embodiment of the present invention. The vehicle control device 1 is mounted in a four-wheel vehicle and performs a brake assist control on the four-wheel vehicle. The vehicle control device 1 includes an obstacle sensor 2, an accelerator pedal sensor 3, a vehicle speed sensor 4, a brake pedal sensor 5, an electronic control unit (ECU) 6, a brake actuator 7, and a throttle valve 8.

The obstacle sensor 2 includes, for example, a laser radar 21 and a sonar 22. For example, the laser radar 21 is provided to a front grill of an own vehicle. The laser radar 21 detects presence or absence of an obstacle ahead and a distance from the own vehicle to the obstacle ahead by emitting a laser beam, scanning a predetermined angular range in front of the own vehicle with the laser beam, and receiving the reflected laser beam. For example, the sonar 22 is provided to the front grill of the own vehicle. The sonar 22 detects presence or absence of an obstacle ahead and a distance from the own vehicle to the obstacle ahead by emitting a sonic wave to a front side of the own vehicle, and receiving the reflected sonic wave. The obstacle ahead is a parked vehicle, a travelling vehicle, or an object other than a vehicle existing just in front along a travelling direction of the own vehicle.

The laser radar 21 can detect an obstacle in a farther distance than the sonar 22, but for the laser radar 21, a lower limit value of the vehicle speed of the own vehicle (own vehicle speed) for detecting the obstacle is higher than that of the sonar 22. For example, the lower limit value of the own vehicle speed for detecting the obstacle is 4 km/h for the laser radar 21 but is 2 km/h for the sonar 22.

In the present embodiment, a PTC controller 62 obtains information related to the obstacle ahead from data measured by the sonar 22, and an AEB controller 61 obtains information related to the obstacle ahead from data measured by the laser radar 21. However, this is merely an example, and the PTC controller 62 may obtain information related to the obstacle ahead using data measured by the laser radar 21, and the AEB controller 61 may obtain information related to the obstacle ahead using data measured by the sonar 22. The information related to the obstacle ahead includes, for example, information indicating whether an obstacle ahead exists and information indicating a distance to the obstacle ahead.

The accelerator pedal sensor 3 (an example of the accelerator operation sensor) includes, for example, a potentiometer angle sensor in which a contact point slides on a resistance element. The accelerator pedal sensor 3 detects a depression amount of the accelerator pedal, converts the depression amount into an electric signal, and outputs the electric signal to the ECU 6. In the present embodiment, the accelerator pedal sensor 3 indicates the depression amount of the accelerator pedal by a rate of an actual depression amount to the maximum depression amount of the accelerator pedal which is 100.

The vehicle speed sensor 4 includes, for example, a wheel speed sensor and detects a vehicle speed of the own vehicle. The wheel speed sensor includes, for example, a gear-shaped rotor provided to a rotating part such as a brake drum, and a sensing unit disposed with a certain gap to the rotor and including a coil, a magnetic pole, and the like. The wheel speed sensor detects a rotational speed of a wheel based on an alternating voltage generated in the coil by rotation of the rotor.

The brake pedal sensor 5 (an example of the brake operation sensor) includes, for example, a potentiometer angle sensor in which a contact point slides on a resistance element. The brake pedal sensor 5 detects a depression amount of the brake pedal, converts the depression amount into an electric signal, and outputs the electric signal to the ECU 6. In the present embodiment, the brake pedal sensor 5 indicates the depression amount of the brake pedal by a rate of an actual depression amount to the maximum depression amount of the brake pedal which is 100.

The ECU 6 includes a computer including a processor such as a CPU, and a memory such as a ROM and a RAM, and totally controls the vehicle control device 1. In the present embodiment, the ECU 6 has functions of the autonomous emergency braking (AEB) controller 61, the pre-collision throttle control (PTC) controller 62, and an adjuster 63. The AEB controller 61, the PTC controller 62, and the adjuster 63 are each implemented by the processor of the ECU 6 executing a predetermined control program. However, this is merely an example, and the AEB controller 61, the PTC controller 62, and the adjuster 63 may be constituted by different computers, respectively.

The AEB controller 61 (an example of the autonomous emergency braking controller) operates the AEB (an example of the first autonomous braking) when the laser radar 21 detects an obstacle ahead. The AEB controller 61 stops operating the AEB when the accelerator pedal sensor 3 detects an accelerator operation equal to or larger than a first operating amount, which is a stop condition. The AEB is autonomous braking for mitigating damage by collision by operating autonomous braking in emergency. A depression amount of the accelerator pedal that can be regarded as an intention of the driver to accelerate is used as the first operating amount. The first operating amount is 50% in the present embodiment. However, this is merely an example, and the first operating amount may be a value other than 50% as long as the value is regarded as the intention of the driver to accelerate.

The PTC controller 62 (an example of the unintended acceleration suppression controller) reduces engine power of the own vehicle and operates the PTC to perform PTC autonomous braking (an example of the second autonomous braking), if an obstacle ahead is detected and an accelerator operation equal to or larger than the second operating amount which is smaller than the first operating amount is detected, in a state where a vehicle speed detected by the vehicle speed sensor 4 is within a predetermined vehicle speed range. The PTC is a sudden acceleration suppression control to mitigate damage by collision caused by a sudden acceleration of an own vehicle by an erroneous operation of the accelerator pedal. Hereinafter, reduction in the engine power by PTC is referred to as "PTC reduction control". To operate the PTC reduction control, the PTC controller 62 may reduce the engine power by closing the throttle valve 8 to stop supplying fuel to an engine.

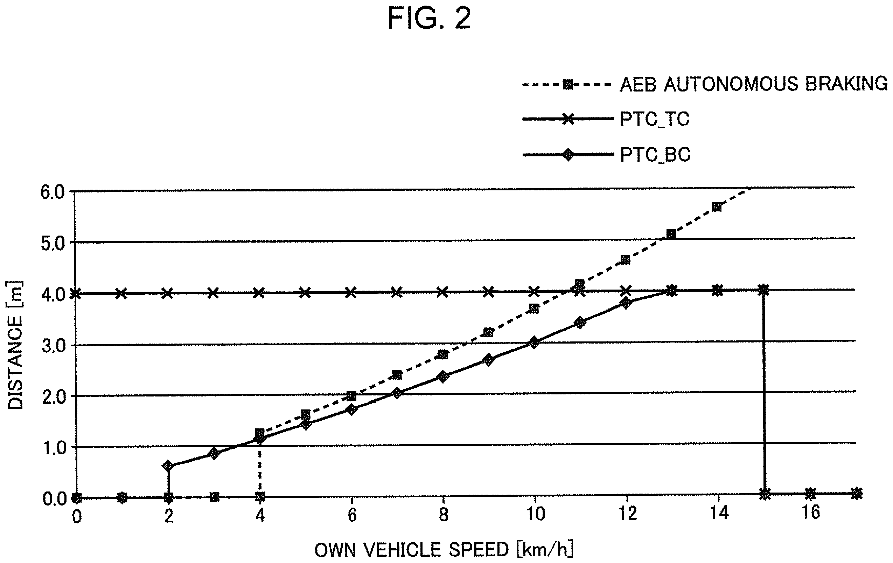

The predetermined vehicle speed range may be a vehicle speed range from 2 km/h to 15 km/h as indicated by a graph PTC_BC in FIG. 2. However, this is merely an example, and the predetermined vehicle speed range may be a different vehicle speed range in which a sudden acceleration by an erroneous operation of the accelerator pedal needs to be suppressed by autonomous braking. The second operating amount may be, for example, a minimum value of the depression amount by which the driver may press down the accelerator pedal by an erroneous operation. The second operating amount in the present embodiment is 10%. However, this is merely an example, and the second operating amount may be in a range smaller than the first operating amount and take a value larger or smaller than 10%.

Referring to FIG. 1, the adjuster 63 prioritizes the PTC autonomous braking when the stop condition for the AEB and the operating condition for the PTC autonomous braking are both satisfied.

The brake actuator 7 causes the brake (not shown) to generate a braking force indicated by a braking command which is output from the ECU 6. To do so, for example, the brake actuator 7 operates the brake with a hydraulic pressure corresponding to the braking force indicated by the braking command. In response to the command by the ECU 6, the throttle valve 8 adjusts an amount of air taken into an engine (not shown). The brake is, for example, a disk brake or a drum brake that brakes a wheel of the vehicle.

FIG. 2 is a chart illustrating an example of operating timings of the PTC and the AEB. In FIG. 2, a vertical axis represents a distance (m) to the obstacle ahead, and a horizontal axis represents an own vehicle speed (km/h).

In FIG. 2, a graph plotted with square points is a graph (hereinafter referred to as "graph AEB") indicating an operating timing of the AEB. When the own vehicle speed and the distance to the obstacle ahead are in a region below the graph AEB, the AEB controller 61 operates the AEB.

The graph AEB keeps the distance to the obstacle ahead at 0 (m) in a vehicle speed range where the own vehicle speed is from 0 km/h to 4 km/h. Thus, the AEB controller 61 does not operate the AEB in this vehicle speed range. For the own vehicle speed higher than 4 km/h (an example of the second lower limit of vehicle speed), the graph AEB is curved in a moderate, downward convex shape along which the distance to the obstacle ahead increases as the own vehicle speed increases. Thus, when the own vehicle speed is equal to or higher than 4 km/h, the AEB controller 61 does not operate the AEB unless the obstacle ahead is nearer for a lower own vehicle speed.

In FIG. 2, a graph plotted with rhomboid-shaped points is a graph (hereinafter referred to as "graph PTC BC") indicating an operating timing of the PTC autonomous braking. When the distance to the obstacle ahead and the own vehicle speed are in a region below the graph PTC_BC, the PTC controller 62 operates the PTC autonomous braking.

The graph PTC_BC keeps the distance to the obstacle ahead at 0 m in a vehicle speed range where the own vehicle speed is from 0 km/h to 2 km/h (an example of a first lower limit of vehicle speed). Thus, the PTC controller 62 does not operate the PTC autonomous braking in this vehicle speed range. According to the graph PTC_BC, when the own vehicle speed is in a vehicle speed range from 2 km/h to 15 km/h, the distance to the obstacle ahead increases as the own vehicle speed increases but within an upper limit of 4 m. Thus, in a vehicle speed range in which the own vehicle speed is from 2 km/h to 13 km/h at which the distance to the vehicle ahead is 4 m, the PTC controller 62 does not operate the PTC autonomous braking unless the obstacle ahead is nearer for a lower own vehicle speed. In a vehicle speed range in which the own vehicle speed is from 13 km/h to 15 km/h, the PTC controller 62 operates the PTC autonomous braking when the distance to the obstacle ahead is 4 m or smaller.

In FIG. 2, a graph plotted with x-marks is a graph (hereinafter referred to as "graph PTC TC") indicating an operating timing of the PTC reduction control. When the distance to the obstacle ahead and the own vehicle speed are in a region below the graph PTC TC, the PTC controller 62 operates the PTC reduction control.

The graph PTC TC keeps the distance to the obstacle ahead at 4 m in a vehicle speed range where the own vehicle speed is from 0 km/h to 15 km/h. Thus, in a vehicle speed range in which the own vehicle speed is equal to or lower than 15 km/h, the PTC controller 62 operates the PTC reduction control when the distance to the obstacle ahead is 4 m or smaller.

As illustrated in FIG. 2, in the present embodiment, the PTC autonomous braking is operated according to the distance to the obstacle ahead when the own vehicle speed is higher than 2 km/h, and when the own vehicle speed is higher than 4 km/h, the operating condition for the AEB is satisfied in addition to the PTC autonomous braking, and both types of the autonomous braking compete against each other. In a configuration where only the AEB is operated when the operating conditions for the PTC autonomous braking and the AEB are both satisfied, no autonomous braking is operated for the vehicle in the vehicle speed range from 2 km/h to 15 km/h if the AEB is stopped by the depression amount of the accelerator exceeding 50%.

Accordingly, in the present embodiment, the adjuster 63 prioritizes the PTC autonomous braking when the operating conditions for the PTC autonomous braking and the AEB are both satisfied. Thus, the PTC autonomous braking is kept operating even when the stop condition for the AEB is satisfied in the vehicle speed range from 4 km/h to 15 km/h, and hence, it is possible to avoid a state where no autonomous braking is operated for the vehicle in the above case. However, even if no autonomous braking is operated in such a case, it does not mean that no braking power acts on the vehicle because the PTC reduction control is operated.

The AEB controller 61 and the PTC controller 62 operate mutually independently. To operate the AEB, the AEB controller 61 sets a predetermined target deceleration and generates a braking command for the deceleration of the vehicle to coincide with the target deceleration. Similarly, to operate the PTC autonomous braking, the PTC controller 62 also sets a predetermined target deceleration and generates a braking command for the deceleration of the vehicle to coincide with the target deceleration.

Accordingly, the adjuster 63 may output an operating command to the PTC controller 62 and non-operation command to the AEB controller 61, when the operating conditions for the AEB and the PTC autonomous braking are both satisfied.

The target deceleration of the AEB and the target deceleration of the PTC autonomous braking may be, for example, a constant value regardless of the own vehicle speed or may take a larger value for a larger own vehicle speed in a stepwise or continuous manner.

In FIG. 2, when the own vehicle speed becomes higher than 15 km/h, the PTC controller 62 stops operating both the PTC autonomous braking and the PTC reduction control. Thus, in a vehicle speed range in which the own vehicle speed is higher than 15 km/h, the AEB is operated according to the distance to the obstacle ahead. This prevents operating the PTC when the own vehicle speed is higher than 15 km/h and suppression of a sudden acceleration is not necessary, and operability can be improved.

In FIG. 2, the lower limit value of the vehicle speed range in which the PTC autonomous braking operates is set to 2km/h. This is because the PTC controller 62 determines whether the PTC is to be operated using data measured by the sonar 22 and the lower limit value of the own vehicle speed for the sonar 22 to detect an obstacle is 2 km/h. The lower limit value of the vehicle speed range in which the AEB automatic braking operates is set to 4 km/h. This is because the AEB controller 61 determines whether the AEB is to be operated using data measured by the laser radar 21 and the lower limit value of the own vehicle speed for the laser radar 21 to detect an obstacle is 4 km/h.

In FIG. 2, the upper limit value of the vehicle speed range in which the PTC autonomous braking and the PTC speed-reduction control operate is set to 15 km/h. This is because the upper limit value of the own vehicle speed at which a sudden acceleration occurs by an erroneous depression of the accelerator pedal is assumed to be about 15 km/h.

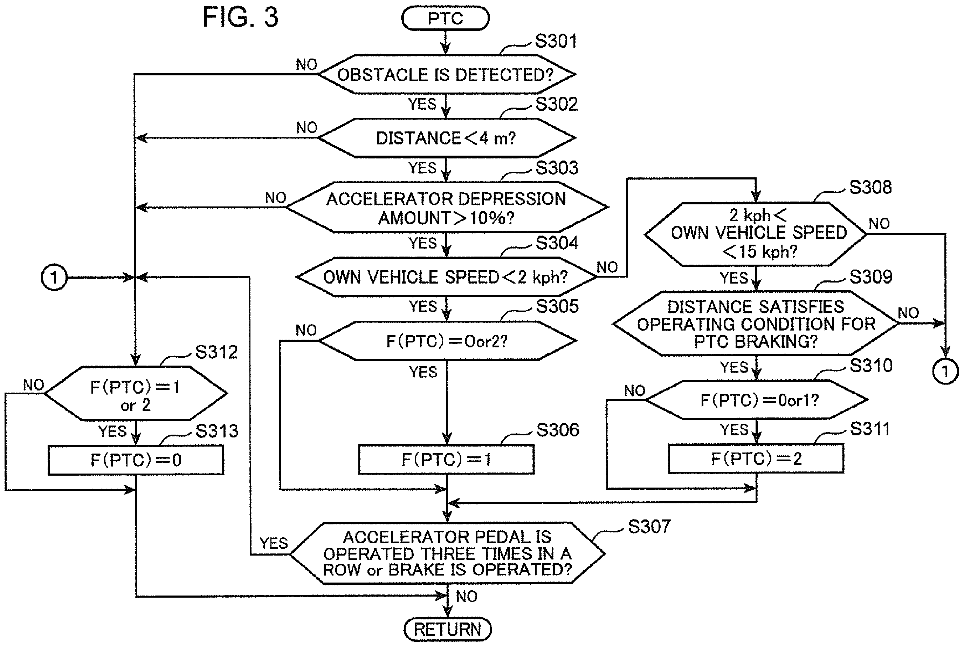

FIG. 3 is a flowchart illustrating an example of a process performed by the PTC controller 62 illustrated in FIG. 1. In S301, the PTC controller 62 determines whether or not the obstacle ahead is detected by the sonar 22 from data measured by the sonar 22. If the sonar 22 detects the obstacle ahead (YES in S301), the PTC controller 62 obtains a distance to the obstacle ahead from data measured by the sonar 22, and determines whether or not the distance is larger than 4 m (S302). Meanwhile, if the sonar 22 detects no obstacle ahead (NO in S301), the process proceeds to S312.

If the distance to the obstacle ahead is equal to or larger than 4 m (NO in S302), the process proceeds to S312, and if the distance to the obstacle ahead is smaller than 4 m (YES in S302), the process proceeds to S303.

In S303, the PTC controller 62 determines whether or not the depression amount of the accelerator pedal detected by the accelerator pedal sensor 3 is larger than 10%. In S303, if the depression amount of the accelerator pedal is larger than 10% (YES in S303), the process proceeds to S304, and if the depression amount of the accelerator pedal is equal to or smaller than 10% (NO in S303), the process proceeds to S312.

In S304, the PTC controller 62 determines whether or not the own vehicle speed detected by the vehicle speed sensor 4 is lower than 2 km/h. In S304, if the own vehicle speed is lower than 2 km/h (YES in S304), the process proceeds to S305, and if the own vehicle speed is equal to or higher than 2 km/h (NO in S304), the process proceeds to S308.

In S305, if a flag F (PTC) of the PTC is 0 or 2 (YES in S305), the PTC controller 62 sets the flag F (PTC) to "1" to operate the PTC speed-reduction control (S306). The flag F (PTC) takes a value of "0", "1", or "2", in which "0" indicates non-operation of the PTC, "1" indicates operating the PTC speed-reduction control, and "2" indicates operating the PTC speed-reduction control and the PTC autonomous braking. Hereinafter, the PTC in which only the PTC speed-reduction control operates is simply referred to as "PTC speed-reduction control", and the PTC in which the PTC speed-reduction control and the PTC autonomous braking operate is referred to as "PTC with autonomous braking".

That is, in S306, the distance to the obstacle ahead and the own vehicle speed are in a region below the graph PTC TC, and hence, the flag F (PTC) is set to "1" to operate the PTC speed-reduction control.

If the flag F (PTC) is "1" (NO in S305) in S305, and the PTC speed-reduction control is operating, the process proceeds to S307.

In S308, the PTC controller 62 determines whether or not the own vehicle speed is in a vehicle speed range from 2 km/h to 15 km/h. If the own vehicle speed is in the vehicle speed range from 2 km/h to 15 km/h (YES in S308), the process proceeds to S309, and if the own vehicle speed is not in the vehicle speed range from 2 km/h to 15 km/h (NO in S308), the process proceeds to S312.

In S309, the PTC controller 62 determines whether or not the distance to the obstacle ahead obtained in S302 is in the region below the graph PTC_BC (FIG. 2) to determine whether or not the distance satisfies the operating condition for the PTC autonomous braking.

If the distance satisfies the operating condition for the PTC autonomous braking (YES in S309), the process proceeds to S310, and if the distance does not satisfy the operating condition for the PTC autonomous braking (NO in S309), the process proceeds to S312.

If the flag F (PTC) is "0" or "1" (YES in S310) in S310, and the PTC with autonomous braking is not operating, the PTC controller 62 sets the flag F (PTC) to "2" to operate the PTC with autonomous braking (S311). Meanwhile, if the flag F (PTC) is "2" (NO in S310) and the PTC with autonomous braking is operating, the process proceeds to S307.

In S307, the PTC controller 62 determines whether or not the accelerator pedal has been operated three times in a row from data measured by the accelerator pedal sensor 3, or, whether or not the brake pedal has been operated from data measured by the brake pedal sensor 5. If the accelerator pedal has been operated three times in a row, the driver is presumed to have an intention to accelerate so that the PTC is not necessary. If the brake pedal has been operated, collision with the obstacle ahead can be mitigated by the driver operating the brake pedal. The process of S307 is provided in this flow for this reason.

If the accelerator pedal has been operated three times in a row or if the brake pedal has been operated (YES in S307) in S307, the process proceeds to S312 to stop operating the PTC. Meanwhile, if the accelerator pedal has not been operated three times in a row and the brake pedal has not been operated (NO in S307) in S307, the process returns to S301 to keep operating the PTC.

If the flag F (PTC) is "1" or "2" (YES in S312) in S312, and the PTC is operating, the PTC controller 62 sets the flag F (PTC) to "0" not to operate the PTC (S313), and the process returns to S301. Meanwhile, if the flag F (PTC) is "0" (NO in S312) in S312, and the PTC is not operating, the process returns to S301.

As described above, the PTC controller 62 repeats the flow in FIG. 3 and determines whether or not the PTC is to be operated.

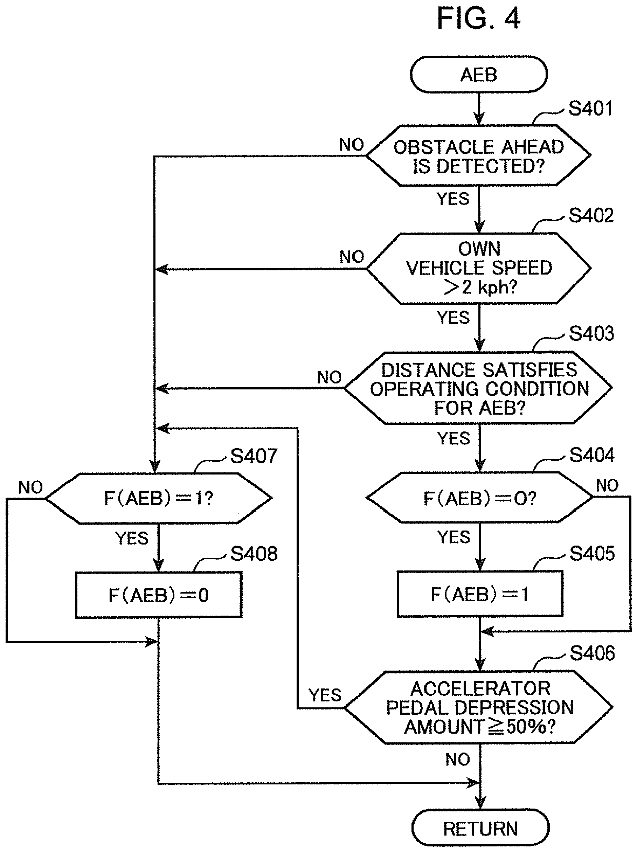

FIG. 4 is a flowchart illustrating an example of a process performed by the AEB controller 61 illustrated in FIG. 1. In S401, the AEB controller 61 determines whether or not the obstacle ahead is detected by the laser radar from data measured by the laser radar 21. If the obstacle ahead is detected by the laser radar 21 (YES in S401), the AEB controller 61 obtains the own vehicle speed from data measured by the vehicle speed sensor 4 and determines whether or not the own vehicle speed is higher than 2 km/h (S402). Meanwhile, if the obstacle ahead is not detected by the laser radar 21 (NO in S401), the process proceeds to S407.

If the own vehicle speed is higher than 2 km/h (YES in S402), the process proceeds to S403, and if the own vehicle speed is equal to or lower than 2 km/h (NO in S402), the process proceeds to S407.

In S403, the AEB controller 61 obtains the distance to the obstacle ahead from data measured by the laser radar 21 and determines whether or not the distance is in the region below the graph AEB (FIG. 2) to determine whether or not the distance satisfies the operating condition for the AEB.

If the distance satisfies the operating condition for the AEB (YES in S403), the process proceeds to S404, and if the distance does not satisfy the operating condition for the AEB (NO in S403), the process proceeds to S407.

If a flag F (AEB) of the AEB is "0" (YES in S404) in S404, the AEB controller 61 sets the flag F (AEB) to "1" to operate the AEB (S405). The flag F (AEB) takes a value of "0" or "1", in which "0" indicates non-operation of the AEB, and "1" indicates operation of the AEB.

If the flag F (AEB) is "1" (NO in S404) in S404, and the AEB is operating, the process proceeds to S406.

The AEB controller 61 obtains the depression amount of the accelerator pedal from data measured by the accelerator pedal sensor 3 in S406, and if the depression amount is equal to or larger than 50% (YES in S406), the driver has an intention to accelerate and the stop condition for the AEB is satisfied, and hence, the process proceeds to S407. Meanwhile, if the depression amount of the accelerator pedal is smaller than 50% (NO in S406), the driver has no intention to accelerate, and hence, the process returns to S401.

If the flag F (AEB) is "1" (YES in S407) in S407, the AEB controller 61 sets the flag F (AEB) to "0" not to operate the AEB (S408). Meanwhile, if the flag F (AEB) is "0" (NO in S407) and the AEB is not operating, the process returns to S401.

As described above, the AEB controller 61 repeats the flow in FIG. 4 and determines whether or not the AEB is to be operated.

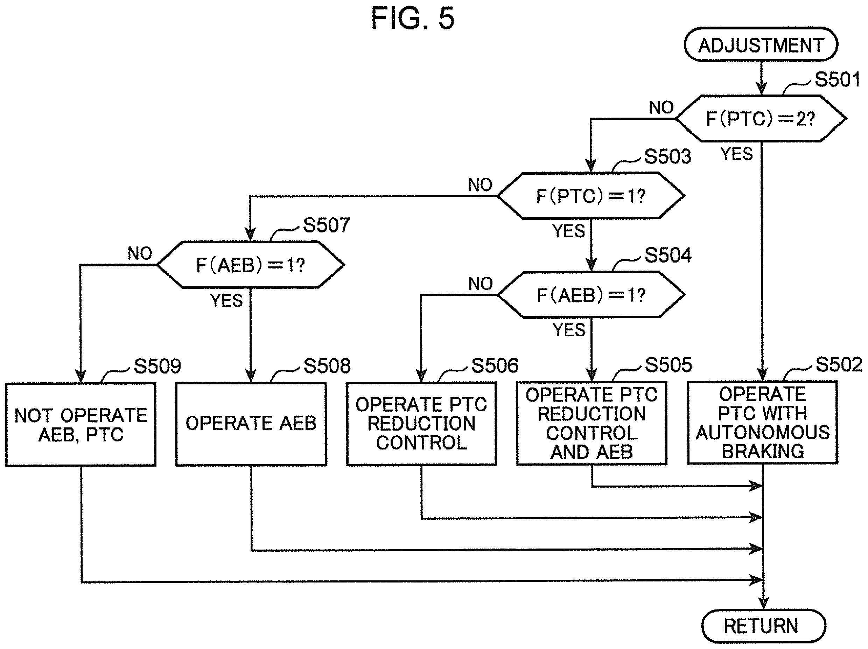

FIG. 5 is a flowchart illustrating an example of a process of the adjuster 63 illustrated in FIG. 1. If the flag F (PTC) is 2 (YES in S501), the adjuster 63 outputs to the PTC controller 62 an operating command for the PTC with autonomous braking regardless of the value of the flag F (AEB) (S502). In this case, the adjuster 63 outputs a non-operation command to the AEB controller 61. This makes the PTC controller 62 output a braking command to the brake actuator 7 to operate the PTC with autonomous braking under a control by the PTC controller 62.

That is, in the processes of S501 and S502, the PTC autonomous braking is operated with priority when the operating conditions for the PTC autonomous braking and the AEB are both satisfied. With this, it is possible to avoid a state of the autonomous braking not operating, even when the depression amount of the accelerator pedal exceeds 50% to satisfy the stop condition for the AEB in the vehicle speed range from 4 km/h to 15km/h.

If the flag F (PTC) is not "2" (NO in S501), the adjuster 63 determines whether or not the flag F (PTC) is "1" (S503). If the flag F (PTC) is "1" (YES in S503) and the flag F (AEB) is "1" (YES in S504), that is, if both the flag F (PTC) and flag F (AEB) are "1", the adjuster 63 outputs an operating command for the PTC reduction control to the PTC controller 62, and outputs an operating command for the AEB to the AEB controller 61. With this, a braking command is output from the AEB controller 61 to the brake actuator 7, and the PTC reduction control is operated by the PTC controller 62.

If the flag F (AEB) is "0" in S504 (NO in S504), that is, if the flag F (PTC) is "1" and the flag F (AEB) is "0", the adjuster 63 outputs an operating command for the PTC reduction control to the PTC controller 62 (S506). Thus, only the PTC reduction control is operated.

When the flag F (PTC) is "0" in S503 (NO in S503), if the flag F (AEB) is "1" (YES in S507), that is, if the flag F (PTC) is "0" and the flag F (AEB) is "1", the adjuster 63 outputs an operating command for the AEB to the AEB controller 61 (S508). At this time, the adjuster 63 outputs a non-operation command for the PTC to the PTC controller 62. Thus, only the AEB is operated.

If the flag F (AEB) is "0" (NO in S507), that is, if the flag F (PTC) is "0" and the flag F (AEB) is "0", the adjuster 63 outputs a non-operation command for the AEB to the AEB controller 61, and outputs a non-operation command for the PTC to the PTC controller 62 (S509). Thus, operations of the AEB and the PTC are stopped.

When the processes of S502, S505, S506, S508, and S509 finish, the process returns to S501. As described above, the adjuster 63 repeats the flow in FIG. 5, and makes adjustment between the AEB and the PTC autonomous braking.

As described above, according to the present embodiment, even if a depression amount of the accelerator equal to or larger than the first operating amount is detected while the PTC autonomous braking is operating, so that the stop condition for the AEB is satisfied, the PTC autonomous braking is kept operating. As a result, a state where no autonomous braking is operated can be avoided in the vehicle speed range from 2 km/h to 4 km/h.

The present invention includes exemplary modifications described below.
(1) In S307 in FIG. 3, it is determined as YES if the operation of the accelerator pedal has been detected three times in a row. However, this is merely an example. It may be determined as YES if the operation of the accelerator pedal has been detected two times, or four or more times.
(2) In FIG. 2, the lower limit value of the vehicle speed range for operating the PTC autonomous braking is set lower than the lower limit value of the vehicle speed range for operating the AEB. However, the relationship between the two lower limit values may be the opposite or the two lower limit values may be the same.
(3) In FIG. 2, the upper limit value of the vehicle speed range in which the PTC autonomous braking is operated and the upper limit value of the vehicle speed range in which the PTC speed-reduction control is operated are set to the same speed of 15 km/h. However, this is merely an example, and the upper limit values may be set to different values.
(4) In FIG. 2, the most part of the graph AEB is above the graph PTC BC. However, the relationship between the two graphs may be the opposite.

### (Summary of Embodiment)

A vehicle control device according to one aspect of the present invention includes:
an obstacle sensor configured to detect an obstacle ahead of an own vehicle;
a vehicle speed sensor configured to detect a vehicle speed of the own vehicle;
an accelerator operation sensor configured to detect an accelerator operation;
an autonomous emergency braking controller configured to operate first autonomous braking if the obstacle ahead is detected, and to stop operating the first autonomous braking when the accelerator operation equal to or larger than a first operating amount is detected, which is a stop condition;
an unintended acceleration suppression controller configured to operate an unintended acceleration suppression control in which engine power of the own vehicle is reduced and second autonomous braking is performed, if the obstacle ahead is detected and the accelerator operation equal to or larger than a second operating amount which is smaller than the first operating amount is detected in a state where a detected vehicle speed is within a predetermined vehicle speed range; and
an adjuster configured to prioritize the second autonomous braking when the stop condition for the first autonomous braking and an operating condition for the second autonomous braking are both satisfied.

When the obstacle ahead is detected, the stop condition for the first autonomous braking and the operating condition for the second autonomous braking may be both satisfied if the accelerator operation is in the range from the second operating amount to the first operating amount. However, in this case, the second autonomous braking is prioritized according to this aspect. Thus, in this aspect, while the second autonomous braking is operating, even if the accelerator operation equal to or larger than the first operating amount is detected to satisfy the stop condition for the first autonomous braking, the second autonomous braking is kept operating. As a result, a state where no autonomous braking is operated can be avoided in the predetermined vehicle speed range.

In the above aspect, it is preferable that the autonomous emergency braking controller is configured to operate the first autonomous braking if the detected vehicle speed is equal to or higher than a second lower limit of vehicle speed which is higher than a first lower limit of vehicle speed that is a lower limit of vehicle speed of the vehicle speed range for the unintended acceleration suppression control.

According to this aspect, even if the vehicle speed is equal to or lower than the second lower limit of vehicle speed and thus the operating condition for the first autonomous braking is not satisfied, the second autonomous braking can be operated if the vehicle speed is higher than the first lower limit of vehicle speed which is lower than the second lower limit of vehicle speed. Hence, it is possible to avoid a state where no autonomous braking is operated in a vehicle speed range lower than the second lower limit of vehicle speed.

In the above aspect, it is preferable that the obstacle sensor is further configured to detect a distance between the obstacle ahead and the own vehicle, and the unintended acceleration suppression controller is further configured to operate the unintended acceleration suppression control if the detected distance is equal to or smaller than a predetermined distance.

According to this aspect, the unintended acceleration suppression control is operated if the distance between the obstacle ahead and the own vehicle is equal to or smaller than the predetermined distance. Hence, it is possible to avoid a state where the unintended acceleration suppression control is operated when the obstacle ahead is far enough from the own vehicle that there is no need to suppress the unintended acceleration, which leads to a state where the unintended acceleration suppression control is frequently operated.

In the above aspect, it is preferable that the vehicle control device further includes a brake operation sensor configured to detect a brake operation, wherein the unintended acceleration suppression controller is configured to stop operating the unintended acceleration suppression control if the accelerator operation is detected N times in a row or the brake operation is detected, where N is an integer of 2 or larger.

According to this aspect, the unintended acceleration suppression control is stopped if the accelerator operation has been made N or more times in a row to indicate that the driver has an intention to accelerate. Hence, it is possible to avoid the unintended acceleration suppression control being kept operating even if the driver has shown the intention to accelerate. Furthermore, the operation of the unintended acceleration suppression control is stopped if a brake operation is detected. Hence, it is possible to prevent operating the unintended acceleration suppression control in a scene where the driver has input a stop operation and there is no need to operate the unintended acceleration suppression control.

In the above aspect, it is preferable that the unintended acceleration suppression controller is configured to operate the unintended acceleration suppression control in which only the engine power of the own vehicle is reduced, if the detected vehicle speed is equal to or lower than a first lower limit of vehicle speed that is the lower limit of vehicle speed of the vehicle speed range for the unintended acceleration suppression control.

According to this aspect, it is possible to perform the unintended acceleration suppression control, in which only the engine power is reduced until the vehicle speed reaches the first lower limit of vehicle speed and the second autonomous braking is included when the vehicle speed exceeds the second lower limit of vehicle speed.

## Claims

1. A vehicle control device comprising:
an obstacle sensor configured to detect an obstacle ahead of an own vehicle;
a vehicle speed sensor configured to detect a vehicle speed of the own vehicle;
an accelerator operation sensor configured to detect an accelerator operation;
an autonomous emergency braking controller configured to operate first autonomous braking if the obstacle ahead is detected, and to stop operating the first autonomous braking when the accelerator operation equal to or larger than a first operating amount is detected, which is a stop condition;
an unintended acceleration suppression controller configured to operate an unintended acceleration suppression control in which engine power of the own vehicle is reduced and second autonomous braking is performed, if the obstacle ahead is detected and the accelerator operation equal to or larger than a second operating amount which is smaller than the first operating amount is detected, in a state where a detected vehicle speed is within a predetermined vehicle speed range; and
an adjuster configured to prioritize the second autonomous braking when the stop condition for the first autonomous braking and an operating condition for the second autonomous braking are both satisfied.

2. The vehicle control device according to claim 1, wherein the autonomous emergency braking controller is configured to operate the first autonomous braking if the detected vehicle speed is equal to or higher than a second lower limit of vehicle speed which is higher than a first lower limit of vehicle speed that is a lower limit of vehicle speed of the vehicle speed range for the unintended acceleration suppression control.

3. The vehicle control device according to claim 1 or 2, wherein
the obstacle sensor is further configured to detect a distance between the obstacle ahead and the own vehicle, and
the unintended acceleration suppression controller is further configured to operate the unintended acceleration suppression control if the detected distance is equal to or smaller than a predetermined distance.

4. The vehicle control device according to any one of claims 1 to 3, further comprising a brake operation sensor configured to detect a brake operation, wherein
the unintended acceleration suppression controller is configured to stop operating the unintended acceleration suppression control if the accelerator operation is detected N times in a row or the brake operation is detected, where N is an integer of 2 or larger.

5. The vehicle control device according to any one of claims 1 to 4, wherein the unintended acceleration suppression controller is configured to operate the unintended acceleration suppression control in which only the engine power of the own vehicle is reduced, if the detected vehicle speed is equal to or lower than a first lower limit of vehicle speed that is the lower limit of vehicle speed of the vehicle speed range for the unintended acceleration suppression control.
